# EUROPEAN PATENT APPLICATION

(11) **EP 4 421 920 A1**
(43) Date of publication of application: **28.08.2024**
(21) Application number: 22883390.1
(22) Date of filing: 07.10.2022
(51) Int. Cl.: H01M 4/86, B01J 23/46, B01J 35/10, H01M 4/92, H01M 8/10

(54) **ELECTRODE CATALYST FOR HYDROGEN FUEL CELL ANODES**

(30) Priority: 19.10.2021 JP 2021170960
(71) Applicant: CATALER CORPORATION, Kakegawa-shi, Shizuoka 437-1492 (JP)
(72) Inventor: TAKANO, Aoi, Kakegawa-shi, Shizuoka 437-1492 (JP); HORIUCHI, Yosuke, Kakegawa-shi, Shizuoka 437-1492 (JP)
(74) Representative: Wallinger Ricker Schlotter Tostmann
(86) International application number: PCT/JP2022/037669
(87) International publication number: WO 2023/068086

(57) **Abstract**

An electrocatalyst for hydrogen fuel cell anodes, comprising a conductive carrier and a noble metal supported on the conductive carrier, wherein the noble metal includes ruthenium and platinum, and a molar ratio Ru/Pt of the ruthenium relative to the platinum is 0.04 mol/mol or more and 0.20 mol/mol or less.

## Description

### FIELD

The present invention relates to an electrocatalyst for hydrogen fuel cell anodes. The electrocatalyst of the present invention is an electrocatalyst for use in anodes of hydrogen fuel cells for generating electricity using hydrogen as fuel.

### BACKGROUND

Research and development of fuel cells have been advancing in order to prevent air pollution, suppress greenhouse gas emissions, and meet the demand for an alternative to fossil fuels. Fuel cells have advantages such as being clean, having high energy density, and requiring no charging. Fuel cells are expected to be a next-generation energy source.

A fuel cell, for example, has a structure in which an anode and a cathode are arranged in opposite via an ion-exchange membrane. When a fuel (for example, hydrogen) is supplied to the anode side and an oxidizer (for example, air) is supplied to the cathode side, a predetermined electrochemical reaction occurs on each electrode and electricity is generated.

Noble metal particles such as Pt particles and Pt alloy particles have been known as electrocatalysts used in fuel cells. For example, PTL 1 discloses an electrocatalyst of a polymer solid electrolyte fuel cell, wherein catalytic noble metal particles composed of an alloy of Pt and an auxiliary metal are supported on a carbon powder carrier.

PTL 2 indicates that Pt-Ru is suitable as an anode catalyst of a direct methanol fuel cell.

A hydrogen fuel cell using hydrogen as fuel, for example, in the case of a solid ion-exchange membrane fuel cell, generates electricity by the following electrochemical reactions (1) and (2) occurring at the anode (hydrogen electrode) and the cathode (air electrode), respectively. Hydrogen electrode:

2H₂ → 4H⁺ + 4e⁻ (1)

Air electrode:

O₂ + 4H⁺ + 4e⁻ → 2H₂O (2)

However, hydrogen peroxide may be generated by a side reaction. When the generated hydrogen peroxide comes into contact with an impurity (for example, iron ions Fe²⁺), hydroxyl radicals (-OH), which have very high oxidizing power, are generated, attacking and degrading the electrolyte membrane and electrode materials, and durability of the fuel cell is impaired.

PTL 3 proposes that an oxide catalyst selected from, for example, MnO₂, RuO₂, ZnO, WO₃, MnO₂-Al₂O₃, RuO₂-Al₂O₃, ZnO-Al₂O₃, and WO₃-Al₂O₃ is added to an electrolyte membrane or an oxidizer electrode (air electrode) of a fuel cell, and describes that generation of hydrogen peroxide is suppressed thereby.

### [CITATION LIST]

### [PATENT LITERATURE]

[PTL 1] Japanese Unexamined Patent Publication (Kokai) No. 2003-142112
[PTL 2] Japanese Unexamined PCT Publication (Kohyo) No. 2008-506513
[PTL 3] Japanese Unexamined Patent Publication (Kokai) No. 2000-106203

### SUMMARY

### [TECHNICAL PROBLEM]

The technique of PTL 3 is a technique that focuses on a two-electron reaction shown in the following electrochemical reaction (3) occurring as a generation mechanism of hydrogen peroxide, in addition to the four-electron reaction shown in the above electrochemical reaction (2) in the cathode (air electrode). Air electrode:

O₂ + 2H⁺ + 2e⁻ → H₂O₂ (3)

However, a portion of oxygen supplied to the cathode may pass through the electrolyte membrane (solid ion-exchange membrane) to reach the anode. The oxygen that reaches the anode reacts with hydrogen atoms (H_{ad}) adsorbed on the anode (particularly, Pt particles, which are a catalytically active species) to generate hydrogen peroxide by the following electrochemical reaction (4). Hydrogen electrode:

2H_{ad} + O₂ → H₂O₂ (4)

It is considered that in the air electrode, the contribution of the four-electron reaction shown in the electrochemical reaction (2) proceeds preferentially, and the contribution rate of the two-electron reaction shown in the electrochemical reaction (3) is low. In contrast, the oxygen that passes through the electrolyte membrane (solid ion-exchange membrane) to reach the hydrogen electrode generates hydrogen peroxide by the electrochemical reaction (4) with high probability. Therefore, the electrochemical reaction (4) in the hydrogen electrode is considered to greatly contribute to the generation of hydrogen peroxide in a hydrogen fuel cell.

The present invention has been completed based on the above considerations. An object thereof is to provide an electrocatalyst for hydrogen fuel cells that can suppress generation of hydrogen peroxide in hydrogen fuel cells for generating electricity using hydrogen as fuel and contribute to improvement of long-term durability of the fuel cells.

### [SOLUTION TO PROBLEM]

The present invention is as follows.

«Aspect 1» An electrocatalyst for hydrogen fuel cell anodes, comprising a conductive carrier and a noble metal supported on the conductive carrier, wherein
the noble metal includes ruthenium and platinum, and
a molar ratio Ru/Pt of the ruthenium relative to the platinum is 0.04 mol/mol or more and 0.20 mol/mol or less.

«Aspect 2» The electrocatalyst according to Aspect 1, wherein a lattice constant of the platinum is 3.900 angstrom or more and 3.921 angstrom or less.

«Aspect 3» The electrocatalyst according to Aspect 1 or 2, wherein an average particle size of the platinum is 2.0 nm or more and 5.0 nm or less.

«Aspect 4» The electrocatalyst according to any one of Aspects 1 to 3, wherein a supported amount of the platinum based on a mass of the electrocatalyst is 10% by mass or greater and 45% by mass or less.

«Aspect 5» The electrocatalyst according to any one of Aspects 1 to 4, wherein the conductive carrier is a carbon black.

«Aspect 6» The electrocatalyst according to any one of Aspects 1 to 5, wherein a specific surface area of the conductive carrier is 30 m²/g or more and 700 m²/g or less.

«Aspect 7» The electrocatalyst according to any one of Aspects 1 to 6, wherein the electrocatalyst is an anode catalyst of a proton-exchange membrane fuel cell.

### [ADVANTAGEOUS EFFECTS OF INVENTION]

According to the present invention, an electrocatalyst for hydrogen fuel cell anodes having a high level of durability with high catalytic activity maintained for a long period of time while exhibiting an effect of suppressing generation of hydrogen peroxide is provided. The electrocatalyst for hydrogen fuel cell anodes of the present invention is particularly suitable as an anode catalyst of a proton-exchange membrane fuel cell.

### BRIEF DESCRIPTION OF DRAWINGS

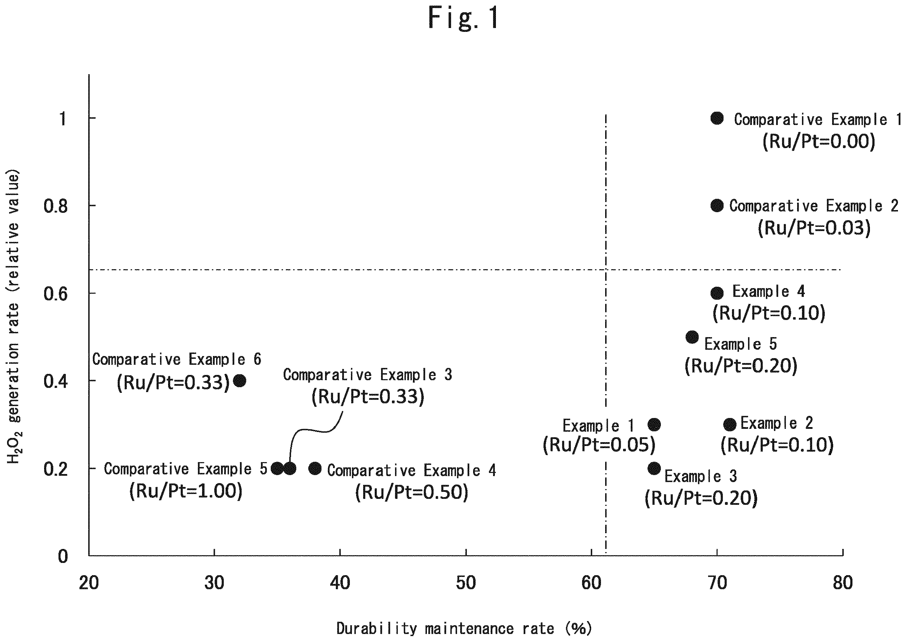

FIG. 1 is a graph illustrating a relationship between hydrogen peroxide generation rate (relative value) and durability maintenance rate for electrocatalysts obtained in the Examples and Comparative Examples.

### DESCRIPTION OF EMBODIMENTS

### «Electrocatalyst for hydrogen fuel cell anodes»

The electrocatalyst for hydrogen fuel cell anodes of the present invention is
an electrocatalyst for fuel cell anodes, comprising a conductive carrier and a noble metal supported on the conductive carrier, wherein
the noble metal includes ruthenium and platinum, and
a molar ratio Ru/Pt of the ruthenium relative to the platinum is 0.04 mol/mol or more and 0.20 mol/mol or less.

The present inventors have discovered that by using Pt and Ru in combination as catalyst components in an electrocatalyst of a hydrogen fuel cell anode and setting the molar ratio Ru/Pt of Ru relative to Pt in the above range, catalytic activity of Pt can be maintained for a long period of time while a suppressing effect on hydrogen peroxide generation amount by Ru (hydrogen peroxide decomposition function) is exhibited, and have completed the present invention.

The reason for the above effect exhibited by setting the molar ratio Ru/Pt to the above range is unclear. However, the present inventors have presumed the reason as follows.

In the electrocatalyst for hydrogen fuel cell anodes of the present invention, the value of the ratio Ru/Pt is small and the relative amount of Ru is small. For example, in the above PTL 2, a Pt-Ru alloy is used for an anode catalyst of a direct methanol fuel cell. However, it is necessary that the ratio Ru/Pt be 1 or greater to exhibit the effect.

In the electrocatalyst for hydrogen fuel cell anodes of the present invention, a hydrogen peroxide generation-suppressing effect by Ru can be obtained by including Ru. In the electrocatalyst for hydrogen fuel cell anodes of the present invention, since the amount of Ru is relatively small, for example, during changes in electric potential at startup and shutdown of the cell, voids caused by migration of Ru are small. Therefore, it is presumed that since the degree of atomic rearrangement that occurs after the generation of voids is decreased, and catalyst degradation factors such as dissolution of catalyst components and agglomeration of noble metal particles are thereby suppressed, durability is excellent.

Hereinafter, each element constituting the electrocatalyst for hydrogen fuel cell anodes of the present invention will be described sequentially in detail.

### <Conductive carrier>

The electrocatalyst for hydrogen fuel cell anodes of the present invention comprises a conductive carrier.

The conductive carrier, for example, may be a carbon carrier. The carbon carrier, for example, may be of carbon black, graphite, carbon fiber, activated carbon, amorphous carbon, or a nanocarbon material. The graphite may be a natural graphite or an artificial graphite. The natural graphite encompasses lump graphite, earthy graphite, and squamous graphite. The artificial graphite encompasses graphitized carbon, obtained by graphitizing any carbon material. The nanocarbon material encompasses carbon nanotube, graphene, and fullerenes.

The conductive carrier in the electrocatalyst for hydrogen fuel cell anodes of the present invention, typically, is carbon black.

In the conductive carrier of the present invention, the specific surface area measured by the BET method using nitrogen as an adsorbent may be 30 m²/g or more, 50 m²/g or more, 100 m²/g or more, 150 m ²/g or more, or 200 m²/g or more, and may be 700 m ²/g or less, 600 m²/g or less, 500 m²/g or less, or 400 m²/g or less.

The specific surface area of the conductive carrier in the present invention, typically, is 30 m² or more and 700 m² or less.

The grain size of the conductive carrier as a number average of primary grain sizes measured by electron microscope observation may be 10 nm or more, 20 nm or more, 50 nm or more, 100 nm or more, or 300 nm or more, and may be 800 nm or less, 600 nm or less, 500 nm or less, or 400 nm or less.

The grain size of the conductive carrier can be calculated as a number average of equivalent diameters, based on photographed electron microscope images of the electrocatalyst for hydrogen fuel cell anodes. Note that, "equivalent diameter" refers to a diameter of a perfect circle having a circumference equal to the circumference of a figure to be measured.

### <Noble metal particle>

The electrocatalyst for hydrogen fuel cell anodes of the present invention comprises a noble metal supported on the above conductive carrier.

The noble metal includes ruthenium (Ru) and platinum (Pt), and has a molar ratio Ru/Pt of Ru relative to Pt of 0.04 mol/mol or more and 0.20 mol/mol or less. By having a ratio Ru/Pt of 0.04 mol/mol or more, a suppressing effect on hydrogen peroxide generation amount is effectively exhibited. By having a ratio Ru/Pt of 0.20 mol/mol or less, durability of the electrocatalyst for hydrogen fuel cell anodes is maintained.

The ratio Ru/Pt may be 0.05 mol/mol or more, 0.06 mol/mol or more, 0.08 mol/mol or more, 0.10 mol/mol or more, 0.12 mol/mol or more, or 0.14 mol/mol or more, and may be 0.19 mol/mol or less, 0.18 mol/mol or less, 0.17 mol/mol or less, 0.16 mol/mol or less, or 0.15 mol/mol or less.

In the noble metal particle of the electrocatalyst for hydrogen fuel cell anodes of the present invention, the lattice constant of Pt may be 3.900 angstrom or more and 3.921 angstrom or less.

When the lattice constant of Pt is 3.900 angstrom or more, durability of the catalyst is satisfactorily maintained. It is considered that when the lattice constant of Pt is 3.900 angstrom or more, alloying rate between Pt and Ru is low and crystals of Pt are substantially maintained. The lattice constant of Pt may be 3.910 angstrom or more, 3.911 angstrom or more, 3.912 angstrom or more, 3.913 angstrom or more, 3.914 angstrom or more, or 3.915 angstrom or more.

When the lattice constant of Pt is 3.921 angstrom or less, inclusion of a sufficient amount of Ru in the noble metal is ensured, and a suppressing effect on hydrogen peroxide generation amount is effectively exhibited. The lattice constant of Pt may be 3.920 angstrom or less, 3.919 angstrom or less, 3.918 angstrom or less, or 3.917 angstrom or less.

The lattice constant of Pt in the electrocatalyst for hydrogen fuel cell anodes of the present invention, typically, may be 3.912 angstrom or more and 3.921 angstrom or less.

The lattice constant of Pt is determined from Bragg's law and the relationship between surface index and surface spacing, using the peak of Pt elemental metal near 2θ = 68° in the XRD chart obtained by the X-ray diffraction method (XRD method) according to JIS K0131.

In the electrocatalyst for hydrogen fuel cell anodes of the present invention, Pt may be present in particle form. The average grain size thereof, typically, for example, may be 2.0 nm or more and 5.0 nm or less. The average grain size of the noble metal particles in the electrocatalyst for hydrogen fuel cell anodes of the present invention may be calculated by the Scherrer equation from the line width of the diffraction peak in a powder XRD measurement of the electrocatalyst for hydrogen fuel cell anodes.

In the present invention, Pt particles may comprise Ru. Hereinafter, the term "Pt particle" herein is used as a concept that encompasses Pt particles and particles comprising Pt and Ru.

For the supported amount of Pt in the electrocatalyst for hydrogen fuel cell anodes of the present invention, the total mass of Pt, as a ratio to the overall mass of the electrocatalyst for hydrogen fuel cell anodes, may be 10% by mass or greater, 15% by mass or greater, or 20% by mass or greater, and may be 45% by mass or less, 40% by mass or less, 35% by mass or less, 30% by mass or less, or 25% by mass or less. When the supported amount of Pt is 10% by mass or greater, sufficiently high catalytic activity is obtained. When the supported amount of Pt is 45% by mass or less, agglomeration of the noble metal particles comprising Pt can be avoided, and as a result, excellent long-term maintainability of catalytic activity is obtained.

The supported amount of Pt in the electrocatalyst for hydrogen fuel cell anodes of the present invention, typically, may be 10% by mass or greater and 45% by mass or less.

In the electrocatalyst for hydrogen fuel cell anodes of the present invention, a metal other than Ru and Pt, in addition thereto, may be supported on the conductive carrier. The metal other than Ru and Pt, for example, may be one or more metals selected from the group consisting of Ti, Cr, Mn, Fe, Co, Ni, Cu, Ga, Zr, Hf, Ir, Pd, Os, and Rh.

The metal other than Ru and Pt may form separate metal particles from Ru and Pt and be supported on the conductive carrier, or may form an alloy with at least one of Ru and Pt and be supported on the conductive carrier as alloy particles.

In the electrocatalyst for hydrogen fuel cell anodes of the present invention, the metal other than Ru and Pt selected from above, in addition thereto, may be contained in a mass ratio of the metal other than Ru and Pt relative to the total mass of Ru and Pt and the metal other than Ru and Pt in the range of 5% by mass or less, 3% by mass or less, 1% by mass or less, or 0.5% by mass or less, or the metal other than Ru and Pt may not be contained.

### «Manufacturing method for electrocatalyst for hydrogen fuel cell anodes»

The electrocatalyst for hydrogen fuel cell anodes of the present invention may be manufactured by any method as long as the electrocatalyst has the above configuration. The electrocatalyst for hydrogen fuel cell anodes of the present invention, for example, may be manufactured by the following method.

The method comprises
supporting Pt on a conductive carrier to obtain a Pt-supporting conductive carrier (Pt supporting step),
supporting Ru on the Pt-supporting conductive carrier to obtain a Pt-Ru-supporting conductive carrier (Ru supporting step), and
baking the Pt-Ru-supporting conductive carrier at a temperature of 150 °C or higher and 800 °C or lower in an inert atmosphere to obtain a baked catalyst (baking step).

The manufacturing method for the electrocatalyst for hydrogen fuel cell anodes of the present invention, during the above baking step,
may further comprise bringing the obtained baked catalyst into contact with an acid to carry out an acid treatment (acid treatment step).

Hereinafter, each step of the manufacturing method for the electrocatalyst for hydrogen fuel cell anodes of the present invention will be described sequentially.

### <Pt supporting step>

In the Pt supporting step, Pt is supported on a conductive carrier to obtain a Pt-supporting conductive carrier.

Supporting Pt on a conductive carrier may be carried out by, for example, a method in which a Pt precursor and a conductive carrier in a coexisting state are brought into contact with a reducing agent in a suitable solvent, whereby Pt ions in the Pt precursor are reduced to metallic Pt, for deposition on the conductive carrier preferably as particulate Pt.

The conductive carrier used herein may be appropriately selected for use according to the conductive carrier in the intended electrocatalyst for hydrogen fuel cell anodes, and for example, may be a carbon carrier, and a carbon material selected from carbon black, graphite, carbon fiber, activated carbon, amorphous carbon, and nanocarbon materials may be used as the conductive carrier.

The Pt precursor may be appropriately selected for use from solvent-soluble Pt compounds. The Pt precursor, for example, may be appropriately selected for use from PtCl₂, PtCl₄, PtBr₂, PtS, Pt(CN)₂, and PtCl₂(NH₃)₂ (dinitrodiammineplatinum).

The solvent may be selected for use from those capable of dissolving the Pt precursor used. For example, hydrochloric acid (aqueous solution of hydrogen chloride) may be used when the Pt precursor is PtCl₂, hydrobromic acid (aqueous solution of hydrogen bromide) may be used when the Pt precursor is PtBr₂, a nitric acid aqueous solution may be used when the Pt precursor is PtCl₂(NH₃)₂, and water may be used when the Pt precursor is PtCl₄, PtS, or Pt(CN)₂.

The reducing agent used when reducing Pt ions in the Pt precursor to metallic Pt, for example, may be ethanol, acetic acid, acetaldehyde, sodium borohydride, or hydrazine. The reduction may be carried out at a temperature of 10 °C or higher and 100 °C or lower for a time of 0.5 h or more and 8 h or less. The reduction temperature is preferably 10 °C or higher and 50 °C or lower when sodium borohydride is used as the reducing agent, and is preferably 60 °C or higher and 100 °C or lower when ethanol, acetic acid, acetaldehyde, or hydrazine is used as the reducing agent.

As a result, a Pt-supporting conductive carrier, wherein Pt is supported on a conductive carrier, is obtained. The obtained Pt-supporting conductive carrier is recovered from a reaction liquid and washed and dried as needed, and may then be subjected to a subsequent step.

### (Ru supporting step)

In the Ru supporting step, Ru is supported on the Pt-supporting conductive carrier obtained in the Pt supporting step to obtain a Pt-Ru-supporting conductive carrier.

The Ru supporting step may be carried out by, for example, a method in which a Ru precursor and the Pt-supporting conductive carrier in a coexisting state are brought into contact with a reducing agent in a suitable solvent, whereby Ru ions in the Ru precursor are reduced to metallic Ru, for deposition on the Pt-supporting conductive carrier.

The Ru precursor may be appropriately selected for use from solvent-soluble Ru compounds. The Ru precursor, for example, may be appropriately selected for use from a ruthenium(III) nitrate nitric acid solution, a ruthenium(III) nitrosyl nitrate nitric acid solution, a sodium ruthenate(VI) solution, and a ruthenium(III) chloride hydrochloric acid solution.

The solvent may be selected for use from those capable of dissolving the Ru precursor used. The solvent, for example, may be water.

The reduction of the Ru precursor may be carried out using a suitable reducing agent. The reducing agent, for example, may be sodium borohydride, hydrazine, hydrogen gas, or formic acid. The neutralizing agent, for example, may be sodium metaborate, sodium hydroxide, sodium carbonate, or ammonia.

The reduction using a reducing agent may be carried out at a temperature of 10 °C or higher and 100 °C or lower for a time of 0.5 h or more and 8 h or less. The reduction temperature is preferably 10 °C or higher and 50 °C or lower when sodium borohydride is used as the reducing agent, and is preferably 60 °C or higher and 100 °C or lower when ethanol, acetic acid, acetaldehyde, or hydrazine is used as the reducing agent.

As a result, a Pt-Ru-supporting conductive carrier, wherein Ru particles are supported on the Pt-supporting conductive carrier, is obtained.

### <Baking step>

In the baking step, the Pt-Ru-supporting conductive carrier obtained in the Ru supporting step is baked at a temperature of 150 °C or higher and 800 °C or lower in an inert atmosphere to obtain a baked catalyst.

The baking temperature of the baking step is related to the lattice constant of Pt of the noble metal particles in the resulting electrocatalyst for hydrogen fuel cell anodes. Specifically, by setting the baking temperature to 150 °C or higher and 800 °C or lower, excessive alloying between Pt and Ru can be avoided, the lattice constant of Pt becomes 3.900 angstrom or more, and hydrogen peroxide is effectively suppressed.

The baking temperature of the baking step may be 150 °C or higher, 200 °C or higher, 300 °C or higher, or 400 °C or higher, and may be 800 °C or lower, 750 °C or lower, 600 °C or lower, or 550 °C or lower. Particularly, when the baking temperature is 600 °C or lower, the lattice constant of Pt becomes 3.912 angstrom or more, and hydrogen peroxide is further effectively suppressed. By setting the baking temperature to 150 °C or higher, residual components derived from starting materials can be removed from the electrocatalyst for hydrogen fuel cells, and high electrode catalytic activity is obtained.

The baking time of the baking step may be 10 min or more, 20 min or more, 30 min or more, 40 min or more, or 45 min or more, from the viewpoint of ensuring conversion from the Ru precursor to Ru metal. On the other hand, from the viewpoint of avoiding excessive alloying between Pt and Ru to ensure high electrode catalytic activity, the baking time may be 150 min or less, 120 min or less, 90 min or less, 80 min or less, or 60 min or less.

The surrounding atmosphere during the baking step may be an inert atmosphere, preferably an argon atmosphere.

### <Acid treatment step>

The baked catalyst obtained in the baking step may be used as the electrocatalyst for hydrogen fuel cell anodes of the present invention as it is, or may be further subjected to an optional acid treatment step.

In the acid treatment step, the baked catalyst obtained in the baking step is brought into contact with an acid to carry out an acid treatment. Since the acid treatment imparts the carbon carrier with hydrophilicity or improves hydrophilicity of the carbon carrier, an improvement in catalytic activity can be expected.

The acid treatment step may be carried out by immersing the baked catalyst in a solution containing an acid. The solution containing an acid used herein, for example, may be a nitric acid aqueous solution, hydrochloric acid, hydrofluoric acid, or sulfuric acid.

In the acid treatment step, the temperature of the solution containing an acid, for example, may be 40 °C or higher, 50 °C or higher, 60 °C or higher, 70 °C or higher, or 80 °C or higher, and for example, may be 100 °C or lower, 95 °C or lower, 90 °C or lower, 85 °C or lower, or 80 °C or lower. The time of the acid treatment step, for example, may be 1 h or more, 2 h or more, or 4 h or more, and for example, may be 24 h or less, 16 h or less, 12 h or less, 8 h or less, or 6 h or less.

The baked catalyst after the acid treatment may be recovered from the solution containing the acid, washed and dried as needed, and then used as the electrocatalyst for hydrogen fuel cell anodes of the present invention.

### «Application of electrocatalyst for hydrogen fuel cell anodes»

The electrocatalyst for hydrogen fuel cell anodes of the present invention is suitable as an electrocatalyst contained in a catalyst layer included in an anode of a hydrogen fuel cell. In the anode comprising the electrocatalyst for hydrogen fuel cell anodes of the present invention, generated amount of hydrogen peroxide is suppressed, and therefore a hydrogen fuel cell comprising the anode can maintain high activity for a long period of time.

The electrocatalyst for hydrogen fuel cell anodes of the present invention particularly may be an anode catalyst of a proton-exchange membrane fuel cell.

The anode of the hydrogen fuel cell may have a suitable substrate layer and a catalyst layer on the substrate layer, wherein the catalyst layer comprises the electrocatalyst for hydrogen fuel cell anodes of the present invention.

The substrate layer may be appropriately selected for use from those having chemical and mechanical stability that can withstand electrocatalysts and solvents for hydrogen fuel cell anodes and heat and pressure treatments preferably carried out during electrode formation. Specifically, for example, a sheet of polyimide, polyethylene, polypropylene, polysulfone, or polytetrafluoroethylene may be used.

The catalyst layer comprises the electrocatalyst for hydrogen fuel cell anodes of the present invention, but may additionally comprise an ionomer, and may further comprise an optional component, for example, a binder. The ionomer, for example, may be Nafion (sulfonated tetrafluoroethylene-based (co)polymer).

The anode comprising the electrocatalyst for hydrogen fuel cell anodes of the present invention can be suitably applied to an electrode assembly for hydrogen fuel cells, having a structure in which the anode, a solid polymer electrolyte membrane, and a cathode are laminated in this order. The solid polymer electrolyte membrane used herein, for example, may be a known proton-exchange membrane. Any known cathode used in hydrogen fuel cells may be used as the cathode.

The above electrode assembly for hydrogen fuel cell anodes can be suitably applied to a hydrogen fuel cell comprising the fuel cell electrode assembly, a hydrogen channel arranged on the anode side of the fuel cell electrode assembly, and an air channel or oxygen channel arranged on the cathode side. The hydrogen fuel cell may be manufactured by a known method, except that an electrode comprising the electrocatalyst for hydrogen fuel cell anodes of the present invention is used as the anode.

### EXAMPLES

### <<Example 1>>

### (1) Preparation of electrocatalyst

1.6 g of a carbon carrier (carbon black) having a specific surface area of 300 m²/g was dispersed in 80 mL of pure water to obtain a dispersion liquid. A dinitrodiammineplatinum nitric acid solution (corresponding to 0.4 g in terms of Pt metal) as a Pt precursor was added thereto dropwise, and the carbon carrier and the Pt precursor were sufficiently blended into the dispersion liquid. Subsequently, 30 g of ethanol as a reducing agent was added to the dispersion liquid and kept at 90 °C for 2 h to reduce the Pt precursor, whereby Pt was supported on the carbon carrier. Solid content was collected by filtration from the obtained dispersion liquid, washed with pure water, and then dried in air at 80 °C for 15 h to obtain a Pt-supporting carbon.

The entire amount of the obtained Pt-supporting carbon catalyst was dispersed in 80 mL of pure water to obtain a dispersion liquid. A ruthenium(III) nitrate nitric acid solution as a Ru precursor was added thereto so that the molar ratio in terms of metal was Ru/Pt = 0.05, and the mixture was sufficiently stirred.

In a separate container from the above, sodium borohydride (SBH) in a molar amount 5 times to that of Ru in the above dispersion liquid was dissolved in pure water to prepare a SBH aqueous solution. The amount of pure water used herein was equivalent to 50 times the mass of SBH, and the concentration of the obtained SBH aqueous solution was 1.96% by mass (1/(1 + 50) = 0.0196).

The above SBH aqueous solution was slowly added dropwise while the dispersion liquid comprising the Pt-supporting carbon and the Ru precursor described above was sufficiently stirred, and the mixture was kept at 30 °C for 2 h to reduce the Ru precursor, whereby Ru was supported on the Pt-supporting carbon. Solid content was collected by filtration from the obtained dispersion liquid, washed with pure water, and then dried in air at 80 °C for 15 h to obtain Pt-Ru-supporting carbon.

The obtained Pt-Ru-supporting carbon was subjected to a heat treatment at 500 °C for 1 h in an argon atmosphere.

The heat-treated Pt-Ru-supporting carbon was immersed in a nitric acid aqueous solution having a concentration of 0.5 N and subjected to an acid treatment at 80 °C for 6 h. Subsequently, solid content was collected by filtration, washed with pure water, and then dried in air at 80 °C for 15 h to obtain an electrocatalyst of Example 1, wherein noble metal particles composed of Pt and Ru were supported on a carbon carrier.

The supported amount of Pt in the obtained electrocatalyst of Example 1 was 20% by mass.

### (2) Evaluation of electrocatalyst

### (2-1) Measurement of average grain size of noble metal particles

The average particle size of Pt particles in the obtained electrocatalyst, calculated from the peak intensity of the peak of Pt elemental metal near 2θ = 68° in the XRD chart obtained by the X-ray diffraction method (XRD method) in accordance with JIS K0131, was 3.0 nm.

### (2-2) Measurement of lattice constant of Pt

The lattice constant of Pt, determined from Bragg's law and the relational expression between surface index and surface spacing, using the peak of Pt elemental metal near 2θ = 68° in the XRD chart obtained in "(2-1) Measurement of average grain size of noble metal particles" above, was 3.921 angstrom.

### (2-3) Hydrogen peroxide generation rate (X_{H2O2})

Ultrapure water and isopropanol were added to the obtained electrocatalyst of Example 1, and Nafion (NAFION^{™}, manufactured by DuPont) of the same mass as the electrocatalyst was further added, and the obtained dispersion liquid was subjected to ultrasonic dispersion to obtain an electrocatalyst slurry for application.

The above electrocatalyst slurry was applied dropwise onto the disk electrode portion of the working electrode of a rotating ring-disk electrode apparatus (manufactured by Hokuto Denko Co., Ltd.) using a micropipette and air-dried to obtain an electrode in which the electrocatalyst was uniformly dispersed.

The electrocatalyst was evaluated using the above electrode as a working electrode, a reference hydrogen electrode (RHE) as a reference electrode, and a perchloric acid aqueous solution having a concentration of 0.1 mol/L as an electrolytic solution. The specific operating procedure was as follows.

The electrolytic solution was subjected to oxygen bubbling to dissolve oxygen to a saturation concentration and then used for evaluation.

Operating the rotating ring-disk electrode apparatus, the working electrode was rotated at 1,600 rpm to stir the electrolytic solution under an environment of an electrolytic solution temperature of 30 °C, and the electric potential of the disk electrode was swept while a constant electric potential of 1.2 V (vs. RHE) was applied to the ring electrode to determine a hydrogen peroxide generation rate (X_{H2O2}) and an effective platinum reaction area (ECSA). Results are shown in Table 1.

Sweeps for the hydrogen peroxide generation rate (X_{H2O2}) measurements were carried out continuously from 0 V (vs. RHE) to 1.0 V in the positive direction, and then from 1.0 V to 0 V in the negative direction. Scanning rates of the sweeps were set to 10 mV/s in both directions. For calculation of the hydrogen peroxide generation rate, a current value when 0.07 V (vs. RHE) was applied when swept in the negative direction was adopted as the case where the environment of an anode electrode of a fuel cell was reproduced. In addition, iR compensation was carried out using a measured value of solution resistance of the electrolytic solution.

The value calculated according to the following formula, in accordance with the method described in J. Electrochem. Soc., 134, 495 (2001), was adopted as the hydrogen peroxide generation rate (X_{H2O2}).

Hydrogen peroxide generation rate X_{H2O2} = (2I_{R}/N)/(I_{D} + I_{R}/N) wherein I_{R} is the ring current value, I_{D} is the disk current value, and N is the collection efficiency.

The collection efficiency N is determined by the following method.

Rotating electrode measurements were carried out in a potassium ferricyanide K₃[Fe(CN)₆] aqueous solution in an argon atmosphere. The value of |I_{R}/I_{D}| in the reduction of [Fe(CN)₆]³⁻ to [Fe(CN)₆]⁴⁻ was determined and defined as the collection efficiency N. Note that "|I_{R}/I_{D}|" represents an absolute value of the number I_{R}/I_{D}.

Values of hydrogen peroxide generation rate (X_{H2O2}) obtained above are shown in Table 1. Note that the hydrogen peroxide generation rate (X_{H2O2}) in Table 1 is shown as a relative value to the value of Comparative Example 1, wherein the electrocatalyst did not comprise Ru, of 1.00.

### (2-4) Evaluation of durability

In an evaluation of durability of the electrocatalyst, a ratio of the effective platinum reaction area (ECSA) before and after a durability test was determined, and the obtained value was defined as "durability maintenance rate" and used as an index of durability.

Ultrapure water and isopropanol were added to the electrocatalyst of Example 1 obtained above, and Nafion (NAFION^{™}, manufactured by DuPont) of the same mass as the electrocatalyst was further added, and the obtained dispersion liquid was subjected to ultrasonic dispersion to obtain an electrocatalyst slurry for application. The obtained electrocatalyst slurry was applied and air-dried on a Teflon^{™} sheet to form a catalyst layer, whereby a hydrogen electrode was prepared. The Pt amount per cm² of catalyst layer of the hydrogen electrode was 0.1 mg.

Except that a 50% by mass Pt-supporting carbon catalyst was used in place of the electrocatalyst of Example 1, an air electrode was produced in the same manner as the hydrogen electrode.

The above hydrogen electrode and air electrode were laminated so that the respective catalyst layers face each other via a polymer electrolyte membrane, and bonded together by hot pressing to produce a membrane electrode assembly. A diffusion layer was formed on each of both sides of the membrane electrode assembly, whereby a unit cell for durability evaluation was produced.

The durability test was carried out under the following conditions, assuming degradation caused by hydrogen deficiency on the anode side during startup and shutdown.

In the obtained unit cell, under an environment of a cell temperature of 40 °C and relative humidity of 100% RH,
a nitrogen supply to the hydrogen electrode side (flow rate of 2.0 L/min) and
a hydrogen supply to the air electrode side (flow rate of 0.3 L/min)
were initiated.

A potentiostat (manufactured by Hokuto Denko Co., Ltd., "HZ5000") was then used to carry out CV measurements at a scanning voltage of 0 to 1.2 V and a sweep rate of 50 mV/s. At this time, the effective platinum reaction area (ESCA) was determined from the peak area of the hydrogen adsorption wave near 0.05 to 0.4 V, and the obtained value was defined as the initial ECSA.

After carrying out 1,500 cycles of electric potential fluctuations between voltages of 0.1 to 1.2 V with a triangular wave at a frequency of 0.5 Hz, an ESCA was determined by the same method as the initial ESCA, and the obtained value was defined as the ESCA after the durability test.

The ratio of the ECSA after the durability test relative to the initial ECSA was evaluated as "durability maintenance rate (%)". Results are shown in Table 1.

### «Examples 2 to 5 and Comparative Examples 1 to 6»

Except that in "(1) Preparation of electrocatalyst", the amounts of ruthenium (III) nitrate nitric acid solution as the Ru precursor were changed so that the molar ratios Ru/Pt in terms of metal were the values in Table 1 and the baking conditions of Pt-Ru-supporting carbons were changed to the temperatures described in Table 1, electrocatalysts were prepared in the same manner as in Example 1 and then evaluated.

Evaluation results are shown in Table 1. A graph illustrating the relationship between hydrogen peroxide generation rate (relative value) and durability maintenance rate is shown in FIG. 1. The Pt:Ru molar ratio of each catalyst is appended in FIG. 1. Note that in FIG. 1, as an electrocatalyst goes towards the lower right of the graph, the more preferable the electrocatalyst is.

### [Table 1]

**Table 1.**

| | Electrocatalyst | | | | | | | Catalytic performance | |
|---|---|---|---|---|---|---|---|---|---|
| | Carrier SSA (m²/g) | Pt supporting amount (% by mass) | Ru/Pt (mol/mol) | Baking condition | | Noble metal particle average particle size (nm) | Lattice constant (angstrom) | H₂O₂ generation rate (relative value) | Durability maintenance rate (%) |
| | | | | Temperature (°C) | Time (h) | | | | |
| Example 1 | 300 | 20 | 0.05 | 500 | 1.0 | 3.0 | 3.921 | 0.3 | 65 |
| Example 2 | 300 | 20 | 0.10 | 500 | 1.0 | 3.0 | 3.917 | 0.3 | 71 |
| Example 3 | 300 | 20 | 0.20 | 500 | 1.0 | 3.0 | 3.912 | 0.2 | 65 |
| Example 4 | 300 | 20 | 0.10 | 800 | 1.0 | 3.0 | 3.911 | 0.6 | 70 |
| Example 5 | 300 | 20 | 0.20 | 800 | 1.0 | 3.0 | 3.902 | 0.5 | 68 |
| Comparative Example 1 | 300 | 20 | 0.00 | 500 | 1.0 | 3.0 | 3.922 | 1.0 | 70 |
| Comparative Example 2 | 300 | 20 | 0.03 | 500 | 1.0 | 3.0 | 3.922 | 0.8 | 70 |
| Comparative Example 3 | 300 | 20 | 0.33 | 500 | 1.0 | 3.0 | 3.905 | 0.2 | 36 |
| Comparative Example 4 | 300 | 20 | 0.50 | 500 | 1.0 | 3.0 | 3.898 | 0.2 | 38 |
| Comparative Example 5 | 300 | 20 | 1.00 | 500 | 1.0 | 3.0 | 3.902 | 0.2 | 35 |
| Comparative Example 6 | 300 | 20 | 0.33 | 800 | 1.0 | 3.0 | 3.890 | 0.4 | 32 |

As seen in Table 1 and FIG. 1, based on Comparative Example 1, wherein the noble metal particles did not comprise Ru, although the electrocatalyst of Comparative Example 2, wherein the Ru/Pt ratio of noble metal particles was less than 0.04, exhibited a high value for durability maintenance rate, the degree of decrease in H₂O₂ generation rate remained low. In addition, each of the electrocatalysts of Comparative Examples 3 to 6, wherein the Ru/Pt ratio of noble metal particles was greater than 0.20, had a decreased H₂O₂ generation rate but exhibited a low value for the durability maintenance rate.

Each of the electrocatalysts of Examples 1 to 5, wherein the Ru/Pt ratio in the noble metal particles was 0.04 or greater and 0.20 or less, had a greatly decreased H₂O₂ generation rate and also exhibited a high value for the durability maintenance rate, compared to Comparative Example 1.

### <<Initial activity of electrocatalyst>>

The initial ECSA values of the electrocatalysts obtained in Example 1 and Comparative Example 1, together with hydrogen peroxide generation rates (relative values) and durability maintenance rates, are shown in Table 2.

### [Table 2]

**Table 2.**

| | H₂O₂ generation rate (relative value) | Initial ECSA (m²/g) | Durability maintenance rate (%) |
|---|---|---|---|
| Example 1 | 0.3 | 31 | 65 |
| Comparative Example 1 | 1.0 | 31.0 | 70 |

As is clear from Table 2, the electrocatalyst of Example 1 exhibited almost the same initial ECSA as the electrocatalyst of Comparative Example 1, and the hydrogen peroxide generation rate was significantly decreased without significantly lowering the durability maintenance rate.

The electrocatalysts of Examples 2 to 5 had an average grain size of noble metal particles equivalent to that of the electrocatalyst of Example 1, and exhibited an initial ESCA equivalent to that of the electrocatalyst of Example 1. In fact, the present inventors have confirmed that an electrocatalyst in which the Ru/Pt ratio in the noble metal particles is 0.04 or greater and 0.20 or less exhibits an initial ECSA equivalent to that of Example 1.

From the foregoing, the electrocatalyst of the present invention was verified to achieve the intended object of the present invention.

## Claims

1. An electrocatalyst for hydrogen fuel cell anodes, comprising a conductive carrier and a noble metal supported on the conductive carrier, wherein
the noble metal includes ruthenium and platinum, and
a molar ratio Ru/Pt of the ruthenium relative to the platinum is 0.04 mol/mol or more and 0.20 mol/mol or less.

2. The electrocatalyst according to claim 1, wherein a lattice constant of the platinum is 3.900 angstrom or more and 3.921 angstrom or less.

3. The electrocatalyst according to claim 1 or 2, wherein an average particle size of the platinum is 2.0 nm or more and 5.0 nm or less.

4. The electrocatalyst according to any one of claims 1 to 3, wherein a supported amount of the platinum based on a mass of the electrocatalyst is 10% by mass or greater and 45% by mass or less.

5. The electrocatalyst according to any one of claims 1 to 4, wherein the conductive carrier is a carbon black.

6. The electrocatalyst according to any one of claims 1 to 5, wherein a specific surface area of the conductive carrier is 30 m²/g or more and 700 m²/g or less.

7. The electrocatalyst according to any one of claims 1 to 6, wherein the electrocatalyst is an anode catalyst of a proton-exchange membrane fuel cell.
